# EUROPEAN PATENT APPLICATION

(11) **EP 1 870 143 A1**
(43) Date of publication of application: **26.12.2007**
(21) Application number: 07110632.2
(22) Date of filing: 20.06.2007
(51) Int. Cl.: A63F 13/12

(54) **System and method for managing transfer of player rights**

(30) Priority: 20.06.2006 SE 0601359
(71) Applicant: ACEI AB, 120 07 Stockholm (SE)
(72) Inventor: Hutchinson-Kay, Christer, 120 07 Stockholm (SE)
(74) Representative: Ketelaars, Maarten F.J.M.

(57) **Abstract**

A system for managing transfer of player rights from a first gaming system to a second gaming system comprising a first gaming system 101A comprising a first data structure 106A adapted for storing a set of parameters representing player rights a second gaming system 101B in data communication with the first gaming system; and comprising a second data structure 106B and a synchronization mechanism (122, 120A, 120B) adapted to synchronize the storage of said player rights parameters in the first and second data structures.

## Description

### Technical Field

The present invention relates to a system for managing transfer of player rights, a method of transferring player rights and a transfer management unit.

### Background

When players play games, for example games of chance like casino type games on slot gaming machines, game related player rights arise. Such game related player rights occur for example in the shape of a monetary credit for stakes or prizes in a game or in the shape of an interrupted game. Traditionally, such rights are only validly claimable or redeemable within a confined gaming system that typically consists of a limited number of gaming machines connected to a common server or operated by a common operator.

### Summary of the Invention

In a first aspect the invention provides a system for managing transfer of player rights from a first gaming system to a second gaming system comprising:
a first gaming system comprising a first data structure adapted for storing a set of parameters representing player rights;
a second gaming system in data communication with the first gaming system; and comprising a second data structure adapted for storing a set of parameters representing player rights; and
a synchronization mechanism adapted to synchronize storage of said player rights parameters between the first and second data structures.

In an embodiment the first gaming system comprises:
a first player rights recording module devised to record a set of parameters representing player rights and to store said parameters in said first data structure; and
a reconstruction module arranged to reconstruct player rights dependent on a set of stored player rights parameters.

In an embodiment the second gaming system comprises:
a second player rights recording module devised to record a set of parameter representing player rights and to store said parameters in said second data structure; and
a second reconstruction module arrangement to reconstruct player rights dependent on a set of stored player rights parameters.

In an embodiment the system further comprises a transfer management unit comprising:
a transfer data structure adapted to store a set of parameters representing player rights; and
a synchronizing module adapted to synchronize the storage of said player rights parameters in the first and second data structures.

In an embodiment the transfer management unit comprises an interface adapted to communicate a set of player rights parameters between said transfer management unit and a gaming system.

In an embodiment the system further comprises a clearing module adapted to manage financial clearing of transferred player rights between the first and a second gaming system.

In an embodiment the clearing module is adapted to manage statistical clearing of transferred game related player rights between a first and a second gaming system.

In an embodiment each data structure is adapted to store:
a player rights description parameter; and
a player rights identification code.

In an embodiment each data structure is adapted to store a set of game session data.

In an embodiment each data structure is adapted to store a set of player session data.

In an embodiment each data structure is adapted to store player rights validity status parameter.

In an embodiment each gaming system is adapted for communicate data representing said game related player rights to a player.

In a second aspect the invention provides a method for managing transfer of player rights from a first gaming system to a second gaming system, comprising the steps of:
storing a set of parameters representing game related player rights in a first system having a first data structure;
communicating said parameters between the first gaming system and a second gaming system comprising a second data structure system; and
synchronizing storage of said player rights parameters between the first and second data structures.

In an embodiment the method further comprises the steps in said first gaming system of:
establishing player rights in response to gaming activity in said gaming system;
storing a set of parameters representing said player rights;
generating a player rights identification code associated with said player rights;
outputting said player rights identification code (PRID) to said player.
In an embodiment the method further comprises the steps in said second gaming system of:
receiving in said second gaming system said PRID representing player rights established in the first gaming system;
requesting a transfer of said game related player rights from said first gaming system to said second gaming system based on said PRID;
receiving said set of player rights parameters associated with said PRID;
reconstructing and presenting player rights dependent on said set of player rights parameters.

In a third aspect the invention provides a method of moving player rights between a first and a second gaming systems, each of said gaming systems having at least one client gaming machine, at least one game server and a central database,
said method comprising the steps of:
generating an identity code representing the rights of a player in a first gaming system;
storing in the central database of said first gaming system said player rights identity code associated with player rights data representing said player rights;
outputting said identity code from said first gaming system;
receiving in a second gaming system a request to use the second gaming system for utilizing said player rights identified by said player rights identity code;
obtaining at said second gaming system said player rights data associated with said player rights identity code from said first gaming system;
enabling in said second gaming system utilization of said player rights.

In a fourth aspect the invention provides a computer program code which when executed causes a computer to carry out the above methods.

In a fifth aspect the invention provides a computer readable medium having thereon the above computer program code.

In a sixth aspect the invention provides a transfer management unit comprising:
a transfer management module adapted to receive a request for a transfer of player rights from a first gaming system to a second gaming system; and
a synchronization module adapted to control synchronization of storage of data representing the player rights in a first data structure of the first gaming system and a second data structure of the second gaming system.

In an embodiment the transfer management unit further comprises a data structure adapted to store a set of parameters representing the player rights being transferred.

In an embodiment the transfer management further comprises an interface adapted to communicate a set of player rights between said transfer management unit and a gaming system.

### Brief Description of the Accompanying Drawings

The inventive concept is further explained by means of examples and in conjunction with the accompanying drawings, in which:
Fig 1 shows an exemplifying embodiment of the invention configured for transferring game related player rights between two different gaming systems via a game clearing system; and
Fig 2 shows an overview of communications occurring in connection with the transfer of game related player rights in the embodiment of Fig 1.

### Detailed Description of Embodiments of the Invention

The preferred embodiment allows player rights, such as the rights to an interrupted game, to an interrupted game session, to a game bonus or to stored credit, to be transferred from one gaming system to another. For example, this technique may be employed when an operator runs a plurality of operatively separated gaming systems, for example in different geographical locations or in different logical configurations, and the operator and/or the players would benefit from the possibility to utilize their player rights in any of the gaming systems independently of which gaming system was used to establish or achieve the rights. Another example is where a plurality of different operators running their respective gaming systems, and the operators and/or the players similarly would benefit from the possibility for the players to utilize their player rights in any of the gaming systems.

The preferred embodiment provides mechanisms for storing, transferring and synchronizing such game related player rights between two gaming systems. A player establishes of game player rights at different stages of a player session, for example when entering a monetary credit value as a fee for playing a game, when a bet value is entered for a particular game round, when a specific game status has been reached during a game session or when a bonus has been assigned the player. These player rights are recorded by storing a representation of the player rights in a central database of the gaming system associated with a player rights identification code. In different embodiments, the player rights are recorded with different levels of resolution, for example on game status level or on monetary balance level, and with different extent of history. When a player session is interrupted intentionally on the command of the player or unintentionally due to an interrupting event in the gaming system, the game related player rights are preserved by means of the stored player rights record. The player rights may represent a current player entitlement developed over a period of time, for example corresponding to the contents of a player tracking system.

In a preferred embodiment, evidence of the recorded game related player rights is communicated to the player in the form of indicia that represents the player rights identification code and by which the player rights record is retrievable. The indicia can for example be printed on a voucher, be stored on a portable data storage device or be indicated associated with a player account.

When a player so wishes, he can claim his player rights by inputting the player rights identification code to the gaming system in which the player rights were achieved. The player rights record is retrieved from the database and the player rights are presented to the player, for example in the shape of a resumed game status, and the player can thereafter utilize the player rights. Exemplary technology for utilizing the player rights within the same system in which the player rights were achieved, is described in the co-pending patent application published under No. WO 2006/052212, the description of which is incorporated in the present patent application by reference, but other technology is also conceivable.

The preferred embodiment enables the player to claim and utilize his game related player rights from another second gaming system different from one in which the player rights were achieved. When a player inputs the player rights identification code indicia in such a second gaming system, the information from the player rights record is requested by the second gaming system and is communicated from the first gaming system from which the player rights originated. The storage of player rights record information in the first and the second gaming systems is synchronized. The player rights are thereafter released to be utilized in the second gaming system, if applicable reconstructed to be utilized, and presented to the player in a suitable manner dependent on the configuration of the second gaming system.

Financial and/or statistical clearing between the first and the second gaming system is carried out as described in further detail below. Preferably, the financial clearing comprises the generation of a basis for determining and transferring compensation between different gaming systems involved in the utilization of player rights dependent on predetermined rules.

A technical effect of one embodiment is that a player is enable to have a player session interrupted in a first gaming system, while preserving any achieved game related player rights. Thereafter the player is able to continue his player session and utilize his game related player rights in a second gaming system, possibly operated by a different operator, while a basis for financial or other compensation between the different gaming systems is provided.

The Figures illustrate examples of a system and a method (which can also be implemented as computer program code stored on a computer program product). The system components are implemented by computer technology including data processors, memory, data communications interfaces, control programs, input/output interfaces etc in a per se well known manner. Different functions and features that are specific for the present invention are preferably realised by means of specific combinations and configurations of hardware components and/or computer program code executed by data processors.

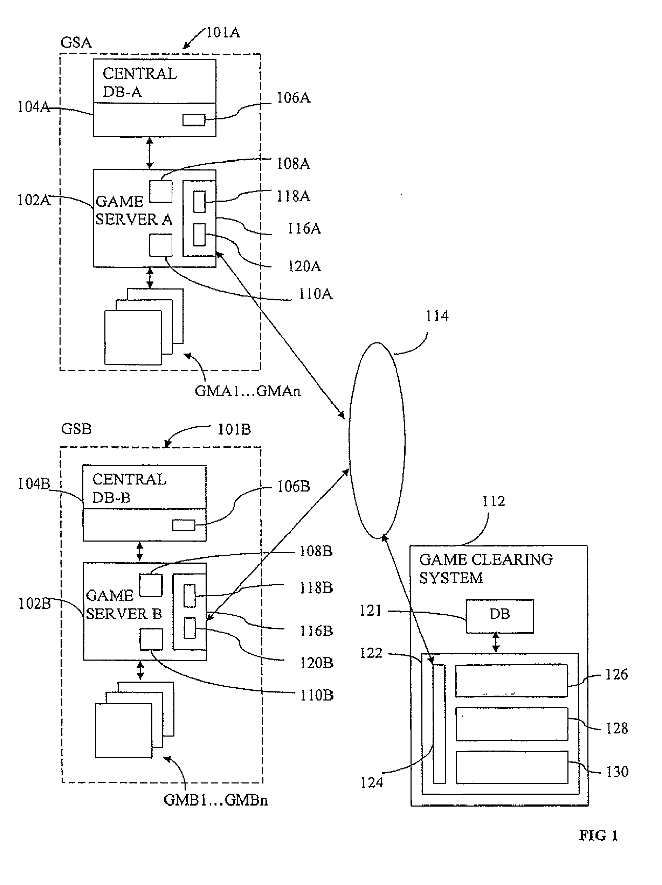

**Fig 1** shows schematically an exemplifying embodiment with a first gaming system GSA 101, a second gaming system GSB 106 and a game clearing system GCS 112 that are communicatively coupled to a data communications network 114. The first and the second gaming systems have in this exemplifying embodiment similar configurations and are logically separated. The first and the second gaming systems will typically also be physically separated in different hardware components that have different geographical locations and be operated by different operators. For the purpose of the description, corresponding components in the first and the second gaming systems respectively have similar reference numerals with an added A or B to denote the gaming system to which the component belongs. The terms "first" and "second" are used herein to arbitrarily denote two gaming systems and do not represent a relative ranking of the systems. The convention used herein is to refer to a gaming system where rights are initially generated as a first gaming system.

Each gaming system has a set of gaming machines GMA1...GMAn, GMB1... GMBn, where n is an arbitrary number, that are communicatively coupled to at least one game server 102A, 102B each being communicatively coupled to a central database DB-A, DB-B. The game servers 102A, 102B each comprise a player rights recording module 108A, 108B devised to record a set of parameters representing player rights and to store the set of parameters in a data structure 106A, 106B comprised in the central database 104A, 104B. The game servers further comprises reconstruction modules 110A, 110B adapted to reconstructing and presenting player rights to the player dependent on a stored set of stored player rights parameters.

The game servers each comprise a player rights transfer module 116A, 116B provided with a player rights transfer interface 188A, 118B adapted for communicating player rights between gaming systems. The player rights transfer interface further comprises a synchronizing module 120A, 120B adapted to synchronize the storage of player rights parameters in the data storages of gaming systems involved in a player rights transfer.

The preferred embodiment has a transfer management unit in the form of a game clearing system (GCS) 112 adapted to manage the transfer of player rights between two gaming systems and preferably also adapted to manage financial and/or statistical clearing of transferred player rights between gaming systems. The game clearing system realizes a server functionality which comprises a database 121 and player rights transfer management module 122. The transfer management module 122 comprises a player rights transfer interface 124 adapted to manage communication of player rights from a first gaming system to a second gaming system, a synchronizing module 126 adapted to manage the synchronization of the storage of player rights parameters in the data structures of the first and second gaming systems. Accordingly the synchronizing module 126 of the GCS together with the synchronizing modules 120A, 120B, of the gaming systems provide a synchronization mechanism in this embodiment. The game clearing system 112 also has a clearing module 128 adapted to manage financial and/or statistical clearing of transferred player rights between gaming systems dependent on predetermined clearing rules 130. In an alternative embodiment the transfer management functions may be configured in one or more of the gaming systems.

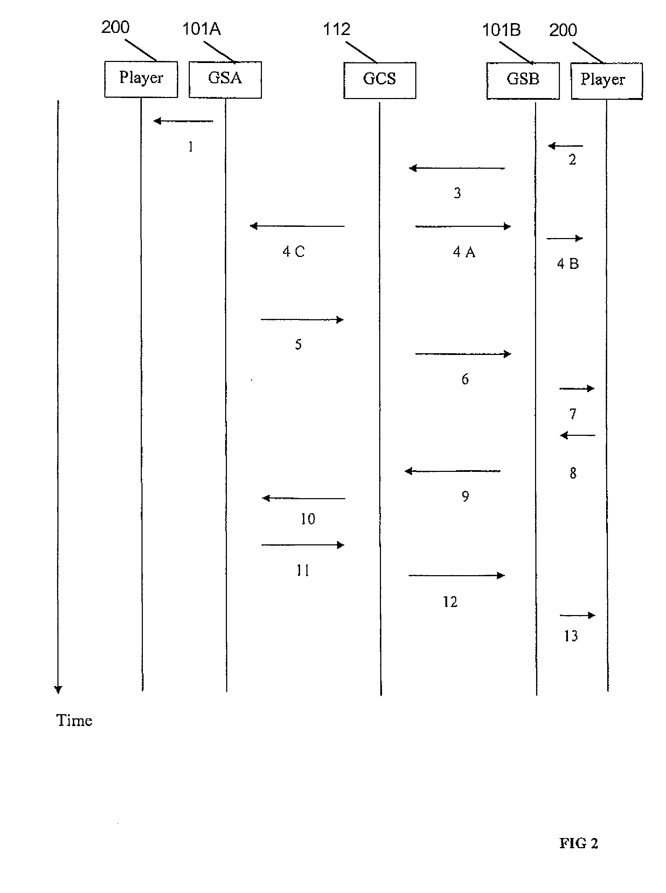

**Fig 2** illustrates communication steps of an exemplifying embodiment of the invention occurring in connection with a transfer of player rights of a player 200 performed by the components described in Fig 1. In Fig 2, the communications are numbered using the below paragraph numbering.
1. A player interacts in a player session with a gaming machine in a first gaming system GSA (101A). Player rights are established as the player session proceeds, first by the player's payment of a fee for playing a game and thereby starting a player session, then depending on the specific implementation by achieving an intermediate game status in a game session or by achieving a game result after a game session has been completed. A set of parameters representing such player rights are stored in the player rights data structure with a predetermined level of resolution and history, and associated with a player rights identification code (PRID). For example in one embodiment the player rights parameters comprise game session data that enables an interrupted game to be reconstructed up to the point of interruption as described in WO 2006/052212. When an interruption occurs, for example in response to a player command to stop a game or due to an operation error in the gaming system, data representing the current player rights is output from the first gaming system GSA to the player. The evidence of the player rights is in one embodiment output as a voucher or a ticket with machine readable indicia, for example in the shape of a voucher having the PRID printed thereon. The PRID may for example also be output to a portable data carrier such as a player tracking device or memory, or be stored associated with a player account.
2. Some time later the player wants to utilize his player rights in a second gaming system GSB (101B) and inputs the PRID to GSB, for example by inserting a voucher in a ticket reader of a gaming machine in the second gaming system GSB, and thereby enters a request to use the second gaming system to utilize the player rights. The game server 102B of GSB checks the received PRID and recognizes that it belongs to a different gaming system. The checking step is in this embodiment performed by functions comprised in the module 110B for player rights reconstruction and may be based on predetermined formats for the indicia with a part of the indicia identifying the originating gaming system or following a failed retrieval attempt in the second database 104B with the indicia as a key for a player rights parameter record.
3. In response to the recognition that the PRID is from a different gaming system, the second gaming system GSB communicates the PRID indicia to the game clearing system GCS 112 and requests a transfer of the player rights to GSB. The transfer management module 122 of the game clearing system GSC receives the transfer request with the transfer interface 124 and initiates a synchronization procedure with the synchronization module 126.
4. The transfer management module 122 of GCS checks the possibility of a transfer inter alia by checking if the issuer (i.e. the first gaming system GSA) of the player rights identification code PRID indicia is a pre-registered part of a player rights to transfer network registered in the GSC database 121. The check is performed for example by checking the format of the PRID gaming system identification element of the PRID, associated with communication data such as data network address and communication protocol information.
   a. If the issuer is not recognised by the GCS, the GSC sends an error message to the transfer requesting gaming system GSB and terminates the synchronization procedure.
   b. The gaming system GSB outputs a message to the player denying the utilization of player rights related to the input PRID indicia.
   c. If the issuer is recognised as a properly registered transfer network member by the GCS, the GSC makes contact with the player rights transfer module 116A via the player rights transfer interface 118A of the first gaming system GSA, communicates the PRID to GSA and starts synchronization of player rights with GSA employing synchronization module 126.
5. The first gaming system GSA receives a request for synchronization of data related to the PRID, thus representing associated game related player rights. The synchronisation module 120A of GSA 101A sets a status parameter to indicate that the player rights associated with the PRID is transferred to GSB and that the associated player rights are invalid to utilize in GSA. In an embodiment, GSA generates a new PRID, "PRID2", for the current player for the purpose of a new balance of game related player rights. That is, in some embodiments a part transfer of the rights defined by the PRID may be allowed or there may be a limit on the rights that can be transferred, for example a minimum cash balance must be left in GSA 101A. Data in the form of all or a selection of the recorded set of parameters representing the player rights stored in the player rights data structure associated with the original PRID is retrieved from the database DBA and is communicated to the game clearing system GSC together with PRID2.
6. The game clearing systems GCS receives the player rights data, stores the data intermediately and communicates the data to the second gaming system GSB whereas PRID2 is stored in the GCS database 121 associated with the first PRID. GCS further generates a billing record for the transfer of player rights associated with the current player rights identification code PRID. The GCS finishes and terminates the synchronization with GSA and GSB, comprising a synchronized storage of the player rights in the databases of the gaming systems GSA and GSB, respectively, and preferably involving a synchronization of status indications in said respective databases. The technology used to ensure that the respective databases of the different gaming systems are properly synchronized is based upon per se known database management functions, e.g. two-phase commit (2PC), three-phase commit (3PC) or Atomic Commit, adapted to the requirements of the gaming industry.
7. The second gaming system GSB is now capable of enabling the utilization of the player rights identified by the PRID. If for example the player rights involve the rights to play or to finish playing a specific game, the gaming system GSB checks if the game is available in GSB.
   a. If the specific game or an equivalent game is not available, the player is presented with the alternatives to select another game or to generate a new player rights evidence or voucher, which would be coupled to PRID2.
   b. If the specific game is available the game is started and reconstructed up to the point of interruption by means of the reconstruction means 110B.
   c. After the transfer the second gaming system GSB is the system owner of the player rights associated with PRID. If an interruption occurs in the gaming system GSB, player rights parameters are stored in the GSB database and a new PRID is generated by GSB and output as a voucher to the player.
8. The player interrupts or terminates the player session after some time of gaming activity or possibly after some time of inactivity, for example by entering an interrupt command to the gaming system GSB. By now the game related player rights have normally changed in content, but may also be equal to the initial player rights status. For example a game status may be different or payment balance, bets, prizes and bonus status may be different.
9. In the preferred embodiment the gaming system GSB communicates a transfer request to the game clearing system GSA for the purpose of transferring a new player rights status associated with the original PRID back to the originating gaming system GSA. In an alternative embodiment the rights are kept in GSB 101B until a player request them in GSA 101A (or another compatible gaming system).
10. The game clearing system GCS associates the new player rights status with the previously stored second player rights identification code PRID2 and initiates synchronization of player rights information with the first gaming system GSA and the second gaming system GSB.
11. The first gaming system GSA combines information in PRID and PRID2 and saves the information in the GSA database.
12. The game clearance systems GCS generates billing information dependent on predetermined clearing rules and saves the billing record in the GSC database.
13. The game clearing system GCS terminates the synchronization with GSA and GSB. If there still are outstanding player rights left, for example in the shape of a credit or an intermediate game status, the second gaming system GSB outputs an evidence for these player rights for example by issuing a new voucher to the player.

The billing record generated in the game clearing system is then used for financial clearing and invoicing between first and second gaming systems involved in transactions of game related player rights. The billing record would, dependent on embodiment, comprise a selection of the following items of information:
- the player rights identification code PRID;
- the second player rights identification code PRID2;
- an identification of the system owner of PRID and PRID2, i.e. in the above example the first gaming system GSA;
- an identification of the system to which the player rights are transferred, i.e. in the above example the second gaming system GSB;
- a timestamp for start and stop of utilization of the transferred player rights at the second gaming system GSB;
- The difference between the original player rights content associated with the first player rights identification code PRID and the resulting player rights content associated with the second player rights identification code PRID2. This may for example be a credit balance or a more complex balance of different game status, calculated by the game clearing system dependent on the predetermined clearing rules.

As an alternative or a complement to the billing record, the game clearance system may comprise a statistics record for storing statistics of game related player rights that have transferred between first and second gaming systems.

The player rights data structures 106A, 106B store a player rights description parameter and a player rights identification code. In an embodiment supporting reconstruction of an interrupted game, the player rights data structure 106A, 106B stores a set of game session data, such as a bet value, a random number and win value. The set of game session data preferably has a history of such data. In another instance the player rights data structure has a set of player session data, such as a monetary value input, a game result history and a monetary balance. Preferably, the player rights data structure 106A, 106B has a player rights validity status parameter.

The preferred embodiment is preferably applied in a gaming system adapted for operating games of chance, such as casino type games, involving the generation of a random number. However, the invention may also be adapted for pure entertainment games.

The present invention thus enables the transfer of player rights that have been achieved in a first gaming system and for use in a second gaming system that is logically and/or geographically separated from the first gaming system.

The above embodiment has been described in relation to two gaming systems, however, persons skilled in the art will appreciate that the same principles can be extended to transferring data between more gaming systems either by providing a transfer management unit that acts as a clearing house between all participating gaming systems or by providing a plurality of transfer management units that manage transfers between subsets of the gaming systems, for example one transfer management unit for each pair of the gaming systems.

Further, while it is assumed in the above discussion that transfer of rights may occur in both directions, it is also possible to conceive embodiments where the available directions of points transfer is controlled.

In the above embodiments it is assumed that all player rights are enabled for roaming if the issuer of a PRID is registered in the GSC database. In some implementations it could be useful to be able to select at a separate level which player rights are enabled to roam to other gaming systems.

This can be achieved by associating a roaming enablement parameter (ROP) to the player rights record in the data structure. The roaming enablement parameter can then be set for each player rights record to "roaming enabled" or "roaming not enabled" dependent on rules. For example,

| | |
|---|---|
| Voucher value : | roaming enabled |
| Game A interrupted : | roaming not enabled |
| Game B interrupted : | roaming enabled |
| Player account value : | roaming enabled |
| Player account - player identity : | roaming enabled or not enabled for individual player. |

The roaming enablement parameter may be communicated with the PRID between the GSA, GCS and GCS and can thereby be changed anytime in the home system. In another embodiment, the roaming enablement parameter may be incorporated in the PRID, which has the effect that the roaming enablement property can be determined by a visited GSB or by the GCS directly from the PRID without any need for delaying communication (and database lookup) between the systems with the disadvantage that the roaming enablement property cannot be changed once a PRID has been generated.

In embodiments, described above where the PRID is issued on a voucher and the player rights are completely transferred to the roamed system the player is effectively anonymous. That is GSA's PRID is roamed to GSB and clearing is performed. GSB has all information and the PRID is "deleted" in GSA. GSB may issue, after a while a new PRID for the same anonymous player. The player may return to GSA but there are no connection between the two PRID's even that it is the same player.

In other embodiments the PRID is associated with a Loyalty card. A PRID stored on a loyalty card will be, if allowed, transferred to GSB. GSB may choose to provide a function where the player can request a partial transfer or player rights or GSA may restrict transfers to potential transfers, for example by capping a transfer amount or requiring the player to keep a minimum balance. If there are costs, for the player or GSB, they will be charged as soon as the PRID passes through GCS. If the player needs more money or he wants to leave GSB to get money from his account a request is sent to GCS for further transition to GSA. GSA acknowledges the request or denies it. If acknowledged funds are sent via the GCS, exchange/roaming fees are debited to GSB. GSB holds a record, PRID associated with the Loyalty Card number and stores the funds there and the player can continue play. Note that the PRID belongs to GSB.

When the player wants to leave GSB and the PRID is associated with a loyalty card the PRID of GSB may be sent to GSA and stored in the players account, rather than being printed on a voucher as it would be if the player was anonymous. Note that the PRID is owned by GSB even when it is stored in GSA's database. If GSB's PRID is played on GSA a clearing must be performed, i.e. fees are charged.

There are a number of possible settlement scenarios since there are two beneficiaries here, the player and "roamed gaming operator":
1. Nobody pays for the service. A set of operators gives this service to players to roam, cash in, play for means stored on voucher or player card without any limitations. This gives the operator the possibility to increase turn over.
2. One party pays;
   a. The player pays an "exchange fee" for example 50$ in GSA is worth 48$ in GSB.
   b. GSB pays a roaming fee to GSA since GSB will have a higher turnover.
3. Both player and GSB pays a fee based upon the amount that is "exchanged".
   In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A system for managing transfer of player rights from a first gaming system to a second gaming system comprising:
a first gaming system comprising a first data structure adapted for storing a set of parameters representing player rights;
a second gaming system in data communication with the first gaming system; and comprising a second data structure adapted for storing a set of parameters representing player rights; and
a synchronization mechanism adapted to synchronize storage of said player rights parameters between the first and second data structures.

2. A system as claimed in claim 1, wherein said first gaming system comprises:
a first player rights recording module devised to record a set of parameters representing player rights and to store said parameters in said first data structure; and
a reconstruction module arranged to reconstruct player rights dependent on a set of stored player rights parameters.

3. A system as claimed in claim 1 or claim 2, wherein said second gaming system comprises:
a second player rights recording module devised to record a set of parameter representing player rights and to store said parameters in said second data structure; and
a second reconstruction module arrangement to reconstruct player rights dependent on a set of stored player rights parameters.

4. The system of any one of claims 1 to 3, further comprising a transfer management unit comprising:
a transfer data structure adapted to store a set of parameters representing player rights; and
a synchronizing module adapted to synchronize the storage of said player rights parameters in the first and second data structures.

5. The system of claim 4, wherein the transfer management unit comprises an interface adapted to communicate a set of player rights parameters between said transfer management unit and a gaming system.

6. The system of any one of claims 1 to 5, further comprising a clearing module adapted to manage financial clearing of transferred player rights between the first and a second gaming system.

7. The system of any one of claims 1 to 5, further comprising a clearing module adapted to manage statistical clearing of transferred game related player rights between a first and a second gaming system.

8. The system of any one of claims 1 to 7, wherein each data structure is adapated to store:
a player rights description parameter; and
a player rights identification code.

9. The system of any one of claims 1 to 7, wherein each data structure is adapted to store a set of game session data.

10. The system of any one of claims 1 to 7, wherein each data structure is adapated to store a set of player session data.

11. The system of any one of claims 1 to 10, wherein each data structure is adapted to store player rights validity status parameter.

12. The system of any one of claims 1 to 11 wherein each gaming system is adapted for communicate data representing said game related player rights to a player.

13. A method for managing transfer of player rights from a first gaming system to a second gaming system, comprising the steps of:
storing a set of parameters representing game related player rights in a first system having a first data structure;
communicating said parameters between the first gaming system and a second gaming system comprising a second data structure system; and
synchronizing storage of said player rights parameters between the first and second data structures.

14. The method of claim 13, further comprising the steps in said first gaming system of:
establishing player rights in response to gaming activity in said gaming system;
storing a set of parameters representing said player rights;
generating a player rights identification code associated with said player rights;
outputting said player rights identification code (PRID) to said player.

15. The method of claim 14, further comprising the steps in said second gaming system of:
receiving in said second gaming system said PRID representing player rights established in the first gaming system;
requesting a transfer of said game related player rights from said first gaming system to said second gaming system based on said PRID;
receiving said set of player rights parameters associated with said PRID;
reconstructing and presenting player rights dependent on said set of player rights parameters.

16. The method of any one of claims 13 - 15, further comprising performing financial clearing of transferred game related player rights between said first and second gaming system.

17. The method of any one of claims 13 - 16, further comprising performing statistical clearing of transferred game related player rights between said first and second gaming system.

18. The method of any one of claims 16 or 17, wherein the clearing involves determining a compensation for the transfer of said game related player rights between the first and second gaming system dependent on clearing rules.

19. A method of moving player rights between a first and a second gaming systems, each of said gaming systems having at least one client gaming machine, at least one game server and a central database,
said method comprising the steps of:
generating an identity code representing the rights of a player in a first gaming system;
storing in the central database of said first gaming system said player rights identity code associated with player rights data representing said player rights;
outputting said identity code from said first gaming system;
receiving in a second gaming system a request to use the second gaming system for utilizing said player rights identified by said player rights identity code;
obtaining at said second gaming system said player rights data associated with said player rights identity code from said first gaming system;
enabling in said second gaming system utilization of said player rights.

20. A computer program code which when executed causes a computer to carry out the steps of any one of claims 13 to 19.

21. A computer readable medium having thereon the computer program code of claim 20.

22. A transfer management unit comprising:
a transfer management module adapted to receive a request for a transfer of player rights from a first gaming system to a second gaming system; and
a synchronization module adapted to control synchronization of storage of data representing the player rights in a first data structure of the first gaming system and a second data structure of the second gaming system.

23. A transfer management unit as claimed in claim 23 further comprising a data structure adapted to store a set of parameters representing the player rights being transferred.

24. A transfer management unit as claimed in 22 or claim 23 further comprising an interface adapted to communicate a set of player rights between said transfer management unit and a gaming system.

25. A transfer management unit as claimed in any one of claims 22 to 24 further comprising a clearing module.

26. A transfer management unit as claimed in any one claims 22 to 25 wherein the clearing module is adapted to manage financial clearing.

27. A transfer management unit as claimed in any one of claims 22 to 25 wherein the clearing module is adapted to manage statistical clearing.
